# EUROPÄISCHE PATENTSCHRIFT

(11) **EP 1 740 932 B1**
(45) Veröffentlichungstag und Bekanntmachung des Hinweises auf die Patenterteilung: **27.11.2013**
(21) Anmeldenummer: 05745183.3
(22) Anmeldetag: 27.04.2005
(51) Int. Cl.: G01N 27/28, G01N 29/036

(54) **Messzelle sowie Verfahren zur Herstellung einer solchen Messzelle**
Measuring cell and method for producing such a measuring cell
Cellule de mesure, son procédé de production

(30) Priorität: 30.04.2004 DE 102004021237; 26.08.2004 DE 102004041595
(43) Veröffentlichungstag der Anmeldung: 10.01.2007
(73) Patentinhaber: Gruber, Markus, 4112 Rottenegg-St. Gotthard (AT)
(72) Erfinder: Gruber, Markus, 4112 Rottenegg-St. Gotthard (AT)
(74) Vertreter: Castell, Klaus
(86) Internationale Anmeldenummer: PCT/DE2005/000783
(87) Internationale Veröffentlichungsnummer: WO 2005/106442

(56) Entgegenhaltungen:
- WO-A-03/067657
- DE-A1- 4 442 396
- US-A- 4 580 439
- US-A1- 2004 016 297
- US-A1- 2004 043 423
- US-B1- 6 254 827
- GUO-WEI XIAO ET AL: "A pressure sensor using flip-chip on low-cost flexible substrate" 2001 PROCEEDINGS 51ST. ELECTRONIC COMPONENTS AND TECHNOLOGY CONFERENCE. ECTC 2001. ORLANDO, FL, MAY 29, 2001, PROCEEDINGS OF THE ELECTRONIC COMPONENTS AND TECHNOLOGY CONFERENCE, NEW YORK, NY : IEEE, US, Bd. CONF. 51, 29. Mai 2001 (2001-05-29), Seiten 750-754, XP010547674 ISBN: 0-7803-7038-4
- PATENT ABSTRACTS OF JAPAN Bd. 1998, Nr. 10, 31. August 1998 (1998-08-31) & JP 10 132679 A (MATSUSHITA ELECTRIC WORKS LTD), 22. Mai 1998 (1998-05-22)
- PATENT ABSTRACTS OF JAPAN Bd. 2000, Nr. 01, 31. Januar 2000 (2000-01-31) & JP 11 281614 A (AKEBONO BRAKE RES & DEV CENTER LTD), 15. Oktober 1999 (1999-10-15)

## Beschreibung

Die Erfindung betrifft einerseits eine Messzelle gemäß Anspruch 1 mit einem Träger und einem Sensor, bei welcher zwischen dem Träger und dem Sensor eine Messkammer vorhanden ist. Andererseits betrifft die Erfindung ein Verfahren zum Herstellen einer derartigen Messzelle.

Insbesondere auf dem Gebiet der biochemischen, chemischen bzw. pharmazeutischen Analytik sind Messzellen bekannt, welche dazu vorgesehen und geeignet sind, geringe Mengen eines Prüfmediums zu analysieren. Hierzu weisen die Messzellen einen Sensor auf, der beispielsweise aus einem Schwingquarz besteht und meistens zusammen mit Anschlussdrähten zwischen zwei O-Ringen derart verklemmt wird, dass die Messzelle eine Messkammer bildet, die zumindest einseitig unmittelbar durch den Schwingquarz begrenzt ist. Auf dem Schwingquarz ist beispielsweise ein Ligand immobilisiert, der einen Analyten des Prüfmediums spezifisch binden kann. Durch das Binden des Analyten ändert sich die Resonanzfrequenz des Schwingquarzes, wodurch der an dem Schwingquarz gebundene Analyt in dem Prüfmedium nachgewiesen werden kann. Beispielsweise handelt es sich bei derartigen Schwingquarzen um Quartz-Crystal-Microbalance-Sensoren (QCM-Sensoren) bzw. um Quartz-Crystal-Resonance-Sensoren (QCR-Sensoren). Derartige Sensoren sind seit einigen Jahren erfolgreich im Einsatz.

Das zu messende Prüfmediumvolumen der Messzelle wird durch Messkammern begrenzt, deren Volumen wiederum von den verwendeten O-Ringen, dem Schwinquarz und einem Trägermaterial, auf welchem einer der O-Ringe unmittelbar angeordnet ist, begrenzt ist. Nach heutiger Bauweise liegen die Volumina herkömmlicher Messkammern bei ca. 50 bis 200 µl. Nachteilig bei derartig großen Volumina ist es, dass beispielsweise hinsichtlich der biochemischen, chemischen bzw. pharmazeutischen Analytik eine zu große Menge an Prüfmedium pro Prüfvorgang benötigt wird, um die Messkammer derart zu füllen, dass nach den heutigen Prüfverfahren ein zuverlässiges Messergebnis vorliegt. In vielen Fällen steht auch nur eine begrenzte Menge an Prüfmedium zur Verfügung.

Darüber hinaus besteht leicht die Gefahr, dass beim Zusammenbauen herkömmlicher Messzellen die empfindlichen dünnen Schwingquarze durch mechanische Verspannung beschädigt werden. Zudem ist das Arbeiten mit Werkzeugen wie Pinzetten beim Handhaben der Schwingquarze unerlässlich, wodurch die Beschädigungsgefahr der bruchempfindlichen Sensoren noch erhöht wird.

Um die vorgenannten Nachteile zu beheben, ist es aus der Druckschrift US 2004/0016297 A1 bekannt, die Sensoren bzw. die Schwingquarze in ringförmige Halter aus Kunststoff einzukleben, um auf diese Weise zum einen die Bruchgefahr der Sensoren und zum anderen das Probenvolumen der Prüfmedien zu reduzieren. Weiterhin offenbart die WO 03067657 A2 ein elektronisches Halbleiterbauteil mit einem Halbleiterchip, der eine aktive Chipfläche aufweist, die von einem erhabenen Metallrahmen eingefasst ist.

Es ist Aufgabe vorliegender Erfindung bekannte Messzellen und deren Messkammern weiter zu verkleinern.

Die Aufgabe der Erfindung wird von einer Messzelle gemäß Anspruch 1 gelöst.

Durch einen derartigen Aufbau ist die vorliegende Messzelle mit ihrer Messkammer konstruktiv besonders einfach aufgebaut und kann dementsprechend sehr klein und mit einer Messkammer ausgeführt werden, welche ein sehr geringes Volumen aufweist.

In diesem Zusammenhang wird die Aufgabe der Erfindung auch von einem Verfahren zum Herstellen einer Messzelle gemäß Anspruch 9 gelöst.

Dadurch, dass der Sensor mittels der einzelnen Materialdepots auf dem Träger befestigt wird, ist es nicht weiter notwendig, eine Verbindung zwischen dem Sensor und dem Träger durch weitere Bauteile bzw. Bauteilgruppen, wie es bei dem derzeitigen Stand der Technik üblich ist, herzustellen.

Bei einem Verfahren zum Herstellen einer derartigen Messzelle kann ein Sensor der Messzelle auf einem Träger der Messzelle mittels eines Flip-Chip-Verfahrens aufgebracht werden. Hierdurch brauchen während der Handhabung des Sensors keinerlei Werkzeuge, wie etwa Pinzetten oder dergleichen, eingesetzt zu werden.

Besonders vorteilhaft ist es, wenn die Bumps vor dem Befestigen des Sensors auf dem Träger aufgetragen wurden. Somit wird der Sensor einfach auf die Bumps des Trägers gesetzt, so dass der Sensor und der Träger eine kompakte feste Einheit bilden.

Die Messkammer der Messzelle wird vorteilhaft bereitgestellt, wenn der Sensor mittels der Bumps beabstandet auf dem Träger befestigt wird, sodass zwischen dem Sensor und dem Träger die Messkammer gebildet wird.

Vorteilhaft ist es bei dem beschriebenen Verfahren, dass die insbesondere im Flip-Chip-Verfahren aufgebrachten Bumps, wie beispielsweise Metallkügelchen, einerseits als Distanzhalter zwischen dem Sensor und dem Träger und andererseits zur elektrischen Kontaktierung zumindest der in Richtung des Trägers weisenden Sensoroberfläche dienen.

Vorteilhafter Weise können nunmehr wesentlich dünnere Sensoren zum Herstellen einer Messzelle verwendet werden, da diese dünnen Sensoren bei der Handhabung nicht mehr mit Pinzetten oder ähnlichem gegriffen und in einem Halter eingelegt werden müssen. Durch das Verwenden der dünneren Sensoren werden genauere Messungen möglich, sodass mit der vorliegenden Messzelle eine verbesserte Analyse eines Prüfmediums möglich ist.

Weiter ist es vorteilhaft, wenn die Materialdepots aus auf dem Träger durch ein Bondverfahren aufgebrachten Bumps bestehen. Derartige Bumps sind bereits aus unterschiedlichen Verbindungstechnologien, wie beispielsweise dem Tape-Automated-Bonding (TAB), den Chips-Size-Packaging (CSP) und dem vorstehend bereits erwähnten Flip-Chip-Verfahren (FC) bekannt.

Somit verbinden derartige Bumps den Sensor und den Träger einer Messzelle miteinander, ohne dass weitere Bauteile bzw. Bauteilgruppen zum Verbinden des Sensors und des Trägers benötigt werden.

Die Bumps sind Distanzhalter zwischen dem Sensor und dem Träger. So ist die Messkammer einer Messzelle besonders einfach hergestellt.

Um zwischen dem Sensor und dem Träger eine elektrisch leitende Verbindung bereitstellen zu können, sind die Bumps elektrisch leitfähig.

Um eine besonders hochwertige Verbindung zwischen dem Sensor und dem Träger zu etablieren, die zum einen elektrisch besonders gut leitend ist und zum anderen ein zu untersuchendes Prüfmedium möglichst wenig beeinflusst, ist es vorteilhaft, wenn die Materialdepots den Werkstoff Gold aufweisen. Darüber hinaus besitzt der Werkstoff Gold die Eigenschaft, dass er sehr resistent gegenüber jeglicher Art von Prüfmedium ist.

Wie bereits vorstehend erwähnt, wird der Sensor durch die Bumps beabstandet von dem Träger positioniert, sodass die im Randbereich des Sensors angeordneten Bumps den Raum zwischen dem Sensor und dem Träger zu einer geschlossenen Messkammer vorbereiten. Deshalb ist es vorteilhaft, dass die Bumps im Randbereich des Sensors zwischen dem Sensor und dem Träger angeordnet sind. Es versteht sich, dass in diesem Zusammenhang nicht jedes Bump zur Gänze zwischen dem Sensor und dem Träger angeordnet sein muss. Vielmehr reicht es in vielen Fällen aus, wenn ein Bump nur teilweise zwischen dem Sensor und dem Träger angeordnet ist.

Die Bumps sind besonders einfach bereitgestellt, wenn sie aus einer lithographisch behandelten Oberflächenbeschichtung des Trägers hergestellt sind. Es versteht sich, dass die Bumps aber auch mit anderen Verfahren hergestellt werden können.

Eine Ausführungsvariante sieht vor, dass der Träger eine Glasplatte aufweist. Es versteht sich, dass als Träger auch Bauteile aus anderen Materialien wie etwa Kunststoff oder sonstigen Leiterplattenmaterialien verwendet werden können.

Es ist vorgeschlagen, dass der Träger zumindest teilweise elektrisch leitfähig ist. Eine Glasplatte kann beispielsweise durch eine Metallisierung der Oberfläche elektrisch leitfähig gemacht und darüber hinaus durch Strukturierung dieser Metalloberfläche als Leiterplatte verwendet werden.

Damit auf dem Träger Informationen gezielt weitergeleitet werden können, ist es vorteilhaft, wenn der Träger Leiterbahnen aufweist. Verfügt der Träger über derartige Leiterbahnen, ist der Anschluss des Sensors vorteilhafter Weise an eine Interface-Schaltung besonders einfach möglich.

Um einen Zugang zu der Messkammer der vorliegenden Messzelle zu erhalten, ist an dem Träger ein Zulauf und ein Ablauf zur Messkammer angeordnet. Vorliegend hat sich bewährt, an dem Träger eine einzelne Zulaufbohrung und mehrere, beispielsweise vier, Ablaufbohrungen vorzusehen. Je nach Anwendungsfall können jedoch auch andere Zahlenverhältnisse zwischen Zulauf und Ablauf vorteilhaft sein.

Vorteilhafter Weise können an dem Träger mehrere Sensoren und/oder ein Sensor-Array angeordnet sein, sodass entweder ein Prüfmedium gleichzeitig auf mehrere Analyten oder mehrere Prüfmedien gleichzeitig auf einen Analyten hin untersucht werden können.

Es versteht sich, dass die Messzelle eine Vielzahl an unterschiedlichen Sensoren aufweisen kann. Insbesondere auf dem Gebiet der biochemischen, chemischen bzw. pharmazeutischen Analytik ist es vorteilhaft, wenn der Sensor ein piezoelektrischer oder kapazitiver Sensor ist. Aber auch zum Beispiel amperometrische oder voltametrische Sensoren können im Zusammenhang mit vorliegender Messzelle zum Einsatz kommen.

Weitere vorteilhafte Anwendungen der vorliegenden Messzelle sind auch in der medizinischen Diagnostik sowie in der Viskositätsmessung zu finden.

Hinsichtlich der vorliegenden Messzelle kann eine Vielzahl an verschiedenen piezoelektrischer Kristalle verwendet werden. Eine vorteilhafte Ausführungsvariante sieht vor, dass der Sensor einen Schwingquarz aufweist.

Eine baulich bevorzugte Ausführungsvariante sieht vor, dass der Sensor an seiner dem Träger zugewandten Seite und/oder an seiner dem Träger abgewandten Seite Elektroden aufweist. Mittels dieser Elektroden lassen sich Messungen im Bereich der Umgebung des Sensors vornehmen. Es ist ebenfalls möglich, eine oder mehrere zusätzliche Elektrode(n) im Bereich der Messkammer auf dem Träger vorzusehen. Mit diesen zusätzlichen Elektroden kann die Leitfähigkeit des Prüfmediums oder die durch das Prüfmedium beeinflusste elektrische Kapazität zwischen zwei korrespondieren Elektroden gemessen werden. Die zusätzliche Elektrode bzw. die zusätzlichen Elektroden können in Zusammenhang mit Kapazitäts-, Strom- oder Leitfähigkeitsmessungen als Gegenelektrode(n) zu den auf der dem Träger zugewandten Seite des Sensors befindlichen Elektroden genutzt werden. Bei der Messung von elektrischen Spannungen bzw. Potenzialen können die auf dem Träger befindlichen Elektroden im Bereich der Messzelle als Referenzelektroden herangezogen werden.

Die elektrische Kontaktierung der dem Träger abgewandten Sensorseite erfolgt über Drähte, die beispielsweise aufgelötet oder gebondet sind. Derartige Drähte komplizieren den Aufbau der vorliegenden Messzelle nicht wesentlich und wirken sich darüber hinaus nicht nachteilig auf das Volumen der Messkammer aus, da sie außerhalb der Messkammer angeordnet sind.

Mit der vorliegenden Messzelle werden ausreichend genaue Messergebnisse erzielt, wenn der Sensor einen Durchmesser mit einem Wert von weniger als 20 mm, vorzugsweise von weniger als 15 mm, aufweist. Hierbei spielt es keine Rolle, ob ein Sensor eine runde Scheibe oder eine rechteckige Scheibe ist.

Um die Menge an benötigtem Prüfmedium beim Analysieren weiter zu reduzieren, ist es vorteilhaft, wenn die Messkammer ein Volumen mit einem Wert von weniger als 20 µl, vorzugsweise von weniger als 10 µl, aufweist. Bisherige Messkammervolumina sind, wie eingangs beschrieben, bedeutend größer, sodass wesentlich mehr Prüfmedium benötigt wird, um ein hinreichend genaues Messergebnis herbei zu führen.

Im Zusammenhang mit einem Durchmesser von 14 mm kann beispielsweise insbesondere ein Messkammervolumen von unter 8 µl erzielt werden, ohne dabei die Messgenauigkeit der Messzelle negativ zu beeinträchtigen.

Durch den vorstehend beschriebenen Aufbau der Messzelle und das beschriebene Verfahren zum Herstellen der Messzelle ist es möglich, den Sensor besonders nahe gegenüber dem Träger zu positionieren, sodass die Messzelle eine besonders flache Messkammer besitzt.

Die Messkammer der Messzelle wird baulich besonders einfach bereitgestellt, wenn die Materialdepots im Randbereich des Sensors zwischen dem Sensor und dem Träger angeordnet sind.

Vorzugsweise wird ein Dichtmittel im Randbereich des Sensors verwendet.

Vorteilhafter Weise kann aufgrund der elektrisch leitfähigen Materialdepots auf zusätzliche elektrische Anschlüsse verzichtet werden. Dies ist einer weiteren Reduzierung der Messzellengröße, insbesondere der Messkammerngröße, förderlich.

Leicht zu handhaben ist die Messvorrichtung, wenn sie eine Sandwichbauweise aufweist. Die Sandwichbauweise ermöglicht zum einen eine sehr kostengünstige Herstellung der einzelnen Bauteile bzw. der einzelnen Bauteilgruppen. Zum anderen ermöglicht sie ein einfaches Einlegen der Messzelle in die Messvorrichtung.

In diesem Zusammenhang ist es vorteilhaft, wenn die Messvorrichtung ein mehrteiliges Gehäuse aufweist.

Um die Messzelle betriebssicher in der Messvorrichtung anordnen zu können, ist es vorteilhaft, wenn die Messvorrichtung eine Messzellenaufnahme aufweist, welche vorzugsweise von der Messvorrichtung abnehmbar ist.

Um die in einer Messvorrichtung eingelegte Messzelle mit einem Prüfmedium gut zu erreichen, ist es vorteilhaft, wenn die Messvorrichtung einen Fluidikblock aufweist, welcher eine Zulauf- und Ablaufeinrichtung für ein Prüfmedium aufweist. Mittels der Zulauf- und Ablaufeinrichtung ist die Messkammer der Messzelle baulich besonders gut zu erreichen. Es versteht sich, dass eine derartige Zulauf- und Ablaufeinrichtung auch in anderen Bereichen der Messvorrichtung angeordnet sein kann.

Neben einem Boden, der die Messvorrichtung nach unten hin abschließt, ist es vorteilhaft, wenn die Messvorrichtung einen Deckel mit einer Platine für eine Interface-Elektronik und mit Kontaktfedern zum automatischen Kontaktieren der Platine und der Messzelle aufweist.

Das mehrteilige Gehäuse kann durch mehrere Verbindungstechniken zusammengehalten werden. Besonders vorteilhaft ist es, wenn die Messvorrichtung mittels Spannmittel aus gummiartigen Ringen oder aus Metallfedern verspannt und zusammengehalten wird.

Es versteht sich, dass zwischen allen separaten Bauteilen der Messvorrichtung Dichtungen vorgesehen sein können, um diese Bauteile untereinander noch sicherer abzudichten.

Weitere Vorteile, Ziele und Eigenschaften vorliegender Erfindung werden anhand der nachfolgenden Erläuterung anliegender Zeichnung beschrieben, in welcher beispielhaft eine Messzelle und eine Messvorrichtung dargestellt sind.

Es zeigt
- Figur 1: schematisch einen Längsschnitt durch eine Messzelle,
- Figur 2: schematisch eine Aufsicht der Messzelle aus der Figur 1,
- Figur 3: schematisch eine perspektivische Ansicht einer Messvorrichtung in Sandwichbauweise mit einer integrierten Messzelle und
- Figur 4: schematisch eine Aufsicht einer alternativen Messzelle.

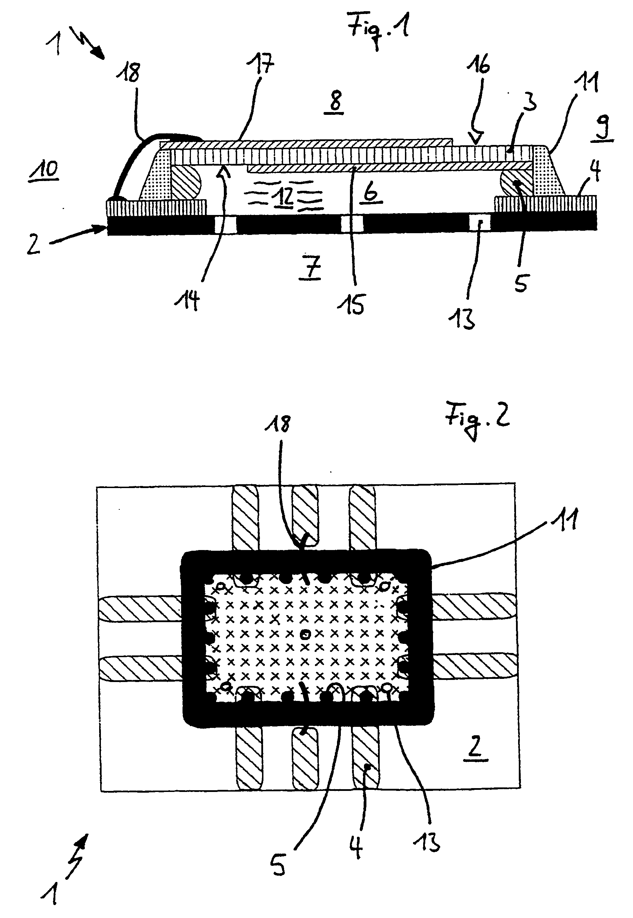

Die in den Figuren 1 und 2 gezeigte Messzelle 1 besteht aus einem Träger 2 aus einer Glasplatte und einem Sensor 3. Der Träger 2 ist einseitig, das heißt im vorliegenden Beispiel, an der dem Sensor 3 zugewandten Seite mit Leiterbahnen 4 beschichtet. Zwischen dem Sensor 3 und dem Träger 2 sind eine Vielzahl an Bumps 5 (hier nur exemplarisch beziffert) aufgetragen. Vorzugsweise befinden sich die Bumps 5 in den Randbereichen des Sensors 3, um zumindest einen Teil des Raums zwischen dem Sensor 3 und dem Träger 2 materialfrei zu gestalten.

Mittels der Bumps 5 ist der Sensor 3' zum einen elektrisch mit dem Träger 2 und damit auch mit den Leiterbahnen 4 des Trägers 2 verbunden und zum anderen beabstandet von dem Träger 2 angeordnet, sodass zwischen dem Träger 2 und dem Sensor 3 eine Messkammer 6 gebildet ist. Die Messkammer 6 ist vorliegend an der unteren Seite 7 der Messzelle 1 durch den Träger 2, an der oberen Seite 8 der Messzelle 1 durch den Sensor 3 und sowohl an der rechten Seite 9 als auch an der linken Seite 10 als auch der Vorder- und Rückseite der Messzelle 1 durch die Vielzahl an gegebenenfalls miteinander verschmolzenen Bumps begrenzt.

Um die Dichtheit der Messkammer 6 im Bereich der Bumps 5 zu erhöhen, ist die Messkammer 6 in diesen Bereichen zusätzlich durch eine Dichtmasse 11 ringsherum abgedichtet. In diesem Ausführungsbeispiel hat die Dichtmasse 11 lediglich dichtende Funktionen und keine zusätzlichen Klebefunktionen um den Sensor 3 auf den Träger 2 zu kleben. Diese Klebefunktion, die einen sicheren Halt des Sensors 3 auf dem Träger 2 sicher stellt, erfolgt in diesem Ausführungsbeispiel im Wesentlichen durch die Vielzahl an Bumps 5.

Damit in die Messkammer 6 ein Prüfmedium 12 gelangen kann, sind in dem Träger 2 Bohrungen 13 (hier nur exemplarisch beziffert) vorgesehen, über welche eine Zufuhr und eine Abfuhr des Prüfmediums 12 in bzw. aus der Messkammer 6 erzielt wird.

An dem Sensor 3 sind an der dem Träger 2 zugewandten Seite 14 erste Elektroden 15 zur Immobilisierung diverser Biomoleküle (hier nicht dargestellt), wie beispielsweise Antikörper, DNA oder Rezeptoren des Prüfmediums 12, angeordnet. Zur Kontaktierung der dem Träger 2 abgewandten Seite 16 des Sensors 3 mit den Leiterbahnen 4 des Trägers 2 weist die Messzelle 1 Anschlussdrähte 18 auf, die eine elektrische Verbindung zwischen den Elektroden 17 und den Leiterbahnen 4 herstellen.

Dadurch, dass der Sensor 3 mittel der Vielzahl an Bumps 5 auf dem Träger 2 befestigt ist, kann der Abstand zwischen dem Sensor 3 und dem Träger 2 sehr gering gestaltet werden, da keine weiteren Bauteile bzw. Bauteilgruppen zum Befestigen des Sensors 3 auf dem Träger 2 benötigt werden. Somit weist die Messzelle 1 einen sehr übersichtlichen und unkomplizierten Aufbau auf, wodurch die Messzelle 1 sehr einfach und günstig hergestellt werden kann. Da die Bumps 5 elektrisch leitfähig sind, ist konstruktiv besonders einfach eine elektrisch leitfähige Verbindung zwischen dem Sensor 3 und/oder den Elektroden 15 des Sensors 3 und dem Träger 2 hergestellt, ohne zusätzlich elektrisch leitfähige Drähte zwischen den Elektroden 15 und den Leiterbahnen 4 vorsehen zu müssen.

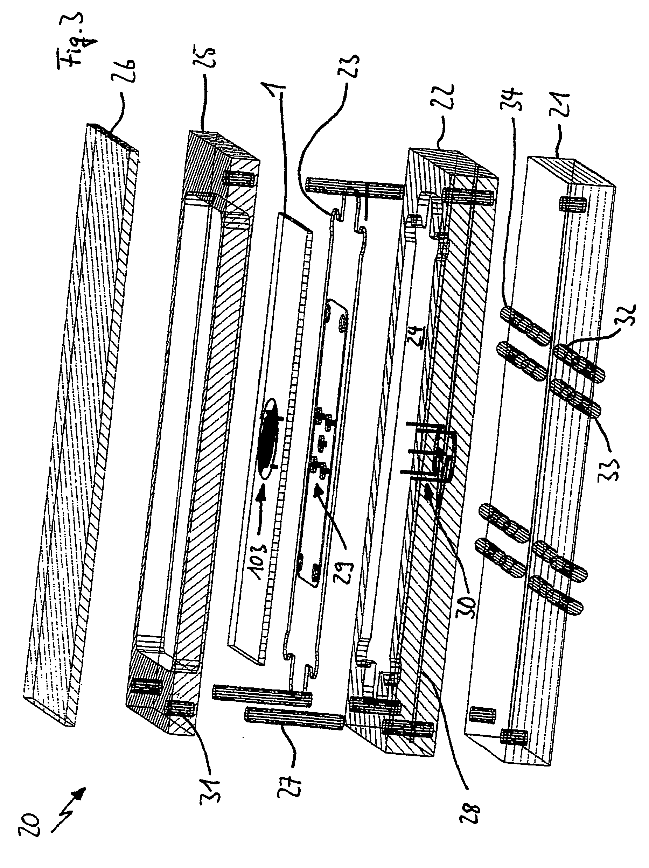

Um die Messzelle 1 schnell und effektiv mit einem Prüfmedium 12 beaufschlagen zu können, eignet sich die in der Figur 3 gezeigte mehrteilige Messvorrichtung 20 besonders gut. Die Messeinrichtung 20 besteht im Wesentlichen aus einer Bodenplatte 21, einem Fluidikblock 22, einer elastischen Dichtung 23, einer Messzellenaufnahme 24, einem Distanzhalter 25, einem Deckel 26 sowie einer Vielzahl an Verbindungsstiften 27. Vorliegend ist die Messzellenaufnahme 24 in dem Fluidikblock 22 integriert.

Die Bodenplatte 21 bildet den unteren Abschluss der Messvorrichtung 20. An der Bodenplatte 21 wird der Fluidikblock 22 angesetzt. Der Fluidikblock 22 weist ein Kanalsystem 28 auf, welches mit den Bohrungen 13 der Messzelle 1 kommuniziert. Über dieses Kanalsystem 28 wird die Messkammer 6 der Messzelle 1 mit einem Prüfmedium 12 befüllt bzw. entleert. In dem Fluidikblock 22 wird die elastische Dichtung 23 eingelegt, die über dichtende Anschlüsse 29 verfügt, die es ermöglichen, eine sichere Verbindung zwischen dem Kanalsystem 28 der Messvorrichtung 20 und den Bohrungen 13 der Messzelle 1 herzustellen.

Die elastische Dichtung 23 besteht vorliegend aus einem Silikon. Zur Anwendung können jedoch auch Materialien wie Gummi oder gummi- bzw. Silikon-ähnliche Materialien, wie beispielsweise Polydimethylsiloxan (PDMS), kommen.

Auf dem Fluidikblock 22 wird die Dichtung 23 und anschließend in die Messzellenaufnahme 24 des Fluidikblockes 22 die Messzelle 1 gelegt. Die Messzelle 1 ist hierbei derart in der Messzellenaufnahme 24 angeordnet, dass die Bohrungen 13 der Messzelle 1 dichtend mit Steigrohren 30 des Kanalsystems 28 zusammenwirken.

Nach oben hin wird die Messvorrichtung 20 mit dem Deckel 26 abgeschlossen. Der Deckel 26 wird mittels des Distanzhalters 25 von dem Fluidikblock 22 beabstandet.

Zum leichteren Montieren und Ausrichten insbesondere des Bodens 21, des Fluidikblocks 22 und des Distanzhalters 25 weisen diese Bauteile Bohrungen 31 auf, in welche die Verbindungsstifte 27 eingeführt bzw. durchgesteckt werden können. Somit sind die einzelnen Bauteile der Messvorrichtung 20 zueinander ausgerichtet. Hierdurch ist eine Montage der Messvorrichtung 20 wesentlich vereinfacht.

Die Bodenplatte 21 weist darüber hinaus eine Vielzahl an Querbohrungen 32 auf, in welche Querstifte 33 und 34 eingeführt werden. Die derart an der Bodenplatte 21 befestigten Querstifte 33, 34 dienen als Befestigungselemente für ein Gummiband (der Übersichtlichkeit halber hier nicht explizit dargestellt), welches ausgehend von den Querstiften 33 über den Deckel 26 der zusammengebauten Messvorrichtung 20 und zu Querstiften 34 gespannt wird. Die Querstifte 34 sind in diesem Ausführungsbeispiel an der Bodenplatte 21 gegenüber den Querstiften 33 angeordnet.

Die vorliegende Messvorrichtung 20 zeichnet sich insbesondere durch ihren einfachen Sandwichaufbau aus, wodurch die Messvorrichtung 20 besonders einfach montiert und demontiert werden kann. Gegenüber ähnlichen Vorrichtungen aus dem Stand der Technik wird weder zum Einlegen der Messzelle 1 noch zum Montieren und Demontieren der Messvorrichtung 20 irgendein Werkzeug benötigt, da alle Bauteile der Messvorrichtung 20 baulich einfach lediglich ineinander gesteckt werden. Mittels des Gummibandes, welches ausgehend von Querstiften 33 über den Deckel 26 zurück zu Querstiften 34 gespannt wird, ist eine ausreichende und sichere sowie einfache Verspannmöglichkeit zum Zusammenhalten der Messvorrichtung 20 geschaffen.

Der Deckel 26 dient gleichzeitig als Platine, welche eine Interface-Elektronik sowie Kontaktfedern (beide hier nicht explizit dargestellt) aufweist. Die Kontaktfedern dienen dazu, automatisch beim Verspannen der Messvorrichtung 20 einen Kontakt zwischen der Interface-Elektronik und der Messzelle (1) zu etablieren.

Alternativ lässt sich der Fluidikblock 22 mit der Bodenplatte 21 durch Kleben oder Verschweißen oder einem sonstigen Verbindungsverfahren dauerhaft zusammenfügen, sodass die Bodenplatte 21 und der Fluidikblock 22 eine feste unlösbare Einheit der Messvorrichtung 20 bilden. Es versteht sich, dass die Bodenplatte 21 und der Fluidikblock 22 auch aus einem Stück hergestellt sein können, sodass die Notwendigkeit entfällt, die Bodenplatte 21 und den Fluidikblock 22 durch ein Verbindungsverfahren zu verbinden.

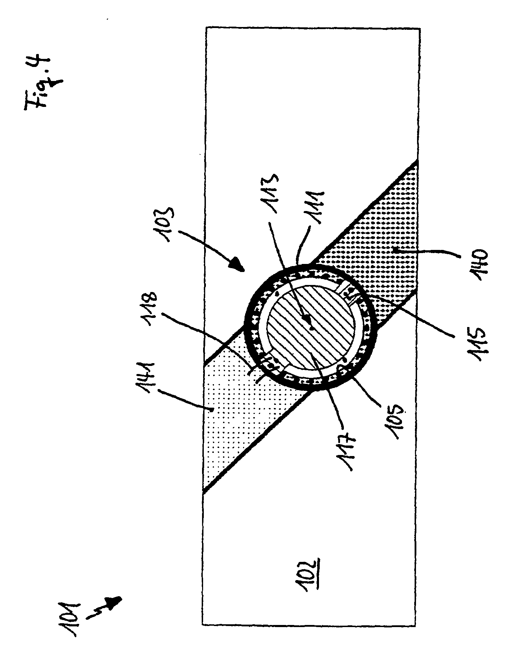

Die in der Figur 4 gezeigte Messzelle 101 weist einen Träger 102 aus einem Glas auf. An dem Träger 102 ist ein piezoelektrischer Sensor 103 angeordnet. Darüber hinaus weist der Träger 102 eine erste elektrische Leiterbahn 140 sowie eine zweite elektrische Leiterbahn 141 auf. Der Sensor 103 ist in seinem Seitenbereich an dem Träger 102 mittels einer Vielzahl an konzentrisch angeordnete Gold-Bumps 105 befestigt. Die Gold-Bumps 105 ermöglichen zum einen einen sehr guten Kontakt der ersten elektrischen Leiterbahn 140 zu der dem Träger 102 zugewandten Seite des Sensors 103 und den dort angeordneten der Trägerplatte 102 zugewandten Elektroden 115 des Sensors 103. Zum anderen befestigen die Gold-Bumps 105 den Sensor 103 beabstandet von dem Träger 102, sodass zwischen dem Träger 102 und dem Sensor 103 eine Messkammer, in welche ein Prüfmedium eingebracht werden kann, etabliert ist. Das Prüfmedium gelangt durch Bohrungen 113 (hier nur exemplarisch beziffert), welche an dem Träger 102 vorgesehen sind, in die Messkammer der Messzelle 101.

Die zweite Leiterbahn 142 ist mittels Anschlussdrähten 118 (hier nur exemplarisch beziffert) mit einer Elektrode 117 des Sensors 103, welche an der dem Träger 102 abgewandten Seite des Sensors 103 angeordnet ist, elektrisch verbunden.

Um die Messkammer im Randbereich des Sensors 103 zwischen dem Träger 102 und dem Sensor 103 vollständig abzudichten, ist im Randbereich eine Dichtmasse 111 zwischen dem Träger 102 und dem Sensor 103 vorgesehen. Während die Messkammer oben durch den Sensor 103 und unten durch den Träger 102 begrenzt wird, begrenzt die Dichtmasse 111 die Messkammer seitlich.

Die dem Träger 102 zugewandten Elektroden 115 des Sensors 103 sind in diesem Beispiel chemisch modifiziert bzw. funktionalisiert, sodass auf diesen Elektroden 115 ein Ligand (hier nicht dargestellt) immobilisiert werden kann. Mittels des Liganden wird ein Analyt (hier nicht dargestellt) in einem Prüfmedium (hier nicht dargestellt) nachgewiesen.

Es versteht sich, dass die hier gezeigten Ausführungsbeispiele die vorliegende Erfindung in keiner Weise einschränken, sondern lediglich Ausführungsbeispiele darstellen. Der Fachmann erkennt, dass die hier gezeigten Messzellen und die gezeigte Messvorrichtung beispielsweise in der Form und Gestalt variieren können.

## Patentansprüche

1. Messzelle mit einem Träger und zumindest einem Sensor oder Sensor-Array, bei welcher der Sensor beabstandet mittels einzelner zwischen dem Träger und dem Sensor vorhandener elektrisch leitfähiger Bumps an dem Träger angeordnet ist, wobei die Bumps Distanzhalter zwischen dem Träger (2) und dem Sensor (3) sind und eine Messkammer zwischen dem Träger und dem Sensor angeordnet ist, wobei die Messkammer zwischen Sensor und Träger im Bereich der Bumps durch eine Dichtmasse (11) ringsherum abgedichtet ist und in dem Träger mindestens eine Zulauf- und mindestens eine Ablaufbohrung vorgesehen sind, über welche eine Zufuhr und eine Abfuhr eines Prüfmediums in die bzw. aus der Messkammer (6) erzielt werden kann, wobei die Bumps (5) zur elektrischen Kontaktierung dienen und den Sensor und den Träger (2) miteinander verbinden und der Sensor ohne weitere Bauteile mittels einer Vielzahl an Bumps auf dem Träger befestigt ist.

2. Messzelle nach Anspruch 1, ***dadurch gekennzeichnet, dass*** der Träger (2) zumindest teilweise elektrisch leitfähig ist.

3. Messzelle nach einem der vorhergehenden Ansprüche, ***dadurch gekennzeichnet, dass*** der Träger (2) Leiterbahnen (4) aufweist.

4. Messzelle nach einem der vorhergehenden Ansprüche, ***dadurch gekennzeichnet, dass*** auf dem Träger (2) eine zusätzliche oder mehrere zusätzliche Elektroden in der Messkammer (6) aufgebracht sind.

5. Messzelle nach einem der vorhergehenden Ansprüche, ***dadurch gekennzeichnet, dass*** der Sensor (3) an seiner dem Träger (2) zugewandten Seite (14) und/oder an seiner dem Träger (2) abgewandten Seite (16) Elektroden (15, 17) aufweist.

6. Messzelle nach einem der vorhergehenden Ansprüche, ***dadurch gekennzeichnet, dass*** der Sensor (3) aus einem piezoelektrischen Material wie beispielsweise Quarz (SiO₂) oder Galliumphosphat (GaPO₄) besteht.

7. Messzelle nach einem der vorhergehenden Ansprüche, ***dadurch gekennzeichnet, dass*** der Sensor ein kapazitiver, amperometrischer oder voltametrischer Sensor ist.

8. Messzelle nach einem der vorhergehenden Ansprüche, ***dadurch gekennzeichnet, dass*** eine Vielzahl an Bumps (5) durch ihre Klebefunktion einen sicheren Halt des Sensors (3) auf dem Träger (2) sicherstellt.

9. Verfahren zur Herstellung einer Messzelle nach einem der vorhergehenden Ansprüche, ***dadurch gekennzeichnet, dass*** auf den Träger durch ein Bondverfahren Bumps (5) aufgebracht werden, die als Materialdepots den Sensor und den Träger (2) miteinander verbinden und die Messkammer im Bereich der Bumps durch eine Dichtmasse abgedichtet wird.

## Claims

1. A measuring cell with a substrate and at least one sensor or sensor array, in which the sensor is arranged on the substrate in a spaced-apart fashion by means of individual electrically conductive bumps provided between the substrate and the sensor, wherein the bumps form spacers between the substrate (2) and the sensor (3) and a measuring chamber is arranged between the substrate and the sensor, wherein the measuring chamber between the sensor and the substrate is sealed all around with a sealing compound (11) in the region of the bumps and the substrate is provided with at least one inlet bore and at least one outlet bore, through which a test medium can be respectively introduced into and discharged from the measuring chamber (6), wherein the bumps (5) serve for electrical contacting and connect the sensor and the substrate (2) to one another, and wherein the sensor is fixed on the substrate without additional elements by means of a plurality of bumps.

2. The measuring cell according to claim 1, ***characterized in that*** the substrate (2) is at least in part electrically conductive.

3. The measuring cell according to one of the preceding claims, ***characterized in that*** the substrate (2) features strip conductors (4).

4. The measuring cell according to one of the preceding claims, ***characterized in that*** one additional or several additional electrodes are deposited on the substrate (2) in the measuring chamber (6).

5. The measuring cell according to one of the preceding claims, ***characterized in that*** the sensor (3) features electrodes (15, 17) on its side (14) that faces the substrate (2) and/or on its side (16) that faces away from the substrate (2).

6. The measuring cell according to one of the preceding claims, ***characterized in that*** the sensor (3) consists of a piezoelectric material such as, for example, quartz (SiO₂) or gallium phosphate (GaPO₄).

7. The measuring cell according to one of the preceding claims, ***characterized in that*** the sensor is a capacitive, amperometric or voltametric sensor.

8. The measuring cell according to one of the preceding claims, ***characterized in that*** a plurality of bumps (5) ensure the secure retention of the sensor (3) on the substrate (2) due to their bonding function.

9. A method for producing a measuring cell according to one of the preceding claims, ***characterized in that*** bumps (5) are deposited on the substrate by means of a bonding method and connect the sensor and the substrate (2) to one another in the form of material depots, and **in that** the measuring chamber is sealed with a sealing compound in the region of the bumps.

## Revendications

1. Cellule de mesure comportant un support et au moins un capteur ou groupe de capteurs, dans laquelle le capteur est disposé espacé au moyen de différents tenons conducteurs électriques positionnés entre le support et le capteur sur le capteur, les tenons étant des écarteurs entre le support (2) et le capteur (3) et une cellule de mesure étant disposée entre le support et le capteur, la cellule de mesure située entre le support et le capteur étant étanchéifiée autour des tenons par une masse d'étanchéité (11) et au moins un trou d'arrivée et au moins un trou de sortie étant pratiqués dans le support, trous par lesquels il est possible d'évacuer un fluide de contrôle dans ou hors de la cellule de contrôle (6), les tenons (5) servant à la mise en contact électrique et reliant le capteur et le support (2) entre eux et le capteur étant fixé sans autres pièces au moyen d'une multitude de tenons sur le support.

2. Cellule de mesure selon la revendication 1, **caractérisé en ce que** le support (2) est au moins partiellement conducteur électrique.

3. Cellule de mesure selon une des revendications précédentes, **caractérisé en ce que** le support (2) présente des circuits imprimés (4).

4. Cellule de mesure selon une des revendications précédentes, **caractérisé en ce qu**'une électrode supplémentaire ou plusieurs sont appliquées sur le support (2) dans la cellule de mesure (6).

5. Cellule de mesure selon une des revendications précédentes, **caractérisé en ce que** le capteur (3) présente des électrodes (15, 17) sur sa face (14) tournée vers le support (2) et/ou sur sa face (16) détournée du support (2).

6. Cellule de mesure selon une des revendications précédentes, **caractérisé en ce que** le capteur (3) est composé d'un matériau piézoélectrique, comme par exemple du quartz (SiO₂) ou du phosphate de gallium (GaPO₄).

7. Cellule de mesure selon une des revendications précédentes, **caractérisé en ce que** le capteur est un capteur capacitif ampérométrique ou voltamétrique.

8. Cellule de mesure selon une des revendications précédentes, **caractérisé en ce qu**'une multitude de tenons garantissent une tenue sûre du capteur (3) sur le support (2) grâce à leur fonction de collage.

9. Procédé de fabrication d'une cellule de mesure selon une des revendications précédentes, **caractérisé en ce que** des tenons (5) sont posés sur le support par un procédé d'assemblage, ces tenons se présentant sous forme d'un dépôt de matériau reliant le capteur et le support (2) entre eux et la chambre de mesure étant étanchéifiée par une masse d'étanchéité au niveau des tenons.
